# EUROPEAN PATENT APPLICATION

(11) **EP 2 775 128 A1**
(43) Date of publication of application: **10.09.2014**
(21) Application number: 12845352.9
(22) Date of filing: 12.07.2012
(51) Int. Cl.: F02G 5/02, F01K 23/10

(54) **WASTE-HEAT RECOVERY SYSTEM**

(30) Priority: 02.11.2011 JP 2011241295
(71) Applicant: Kabushiki Kaisha Toyota Jidoshokki, Kariya-shi, Aichi 448-8671 (JP)
(72) Inventor: ENOKIJIMA, Fuminobu, Kariya-shi Aichi 448-8671 (JP); IGUCHI, Masao, Kariya-shi Aichi 448-8671 (JP); MORI, Hidefumi, Kariya-shi Aichi 448-8671 (JP); ISHIGURO, Fumihiko, Kariya-shi Aichi 448-8671 (JP)
(74) Representative: Winter, Brandl, Fürniss, Hübner, Röss, Kaiser, Polte - Partnerschaft mbB
(86) International application number: PCT/JP2012/067839
(87) International publication number: WO 2013/065361

(57) **Abstract**

In a waste-heat recovery system, a gear pump and an electric motor share a drive shaft. A pump interior portion and a motor interior portion are partitioned from each other by a shaft seal, and the pump interior portion defines a part of a circulation path of a Rankine cycle circuit. One end of a communication path that is communicated to the motor interior portion is connected to a bottom portion of a housing, and the other end of the communication path is connected to the circulation path at a position between an expander and a condenser in the Rankine cycle circuit.

## Description

### Technical Field

The present invention relates to a waste-heat recovery system, and more particularly, to a waste-heat recovery system for a vehicle, which employs a Rankine cycle.

### Background Art

There has been developed a waste-heat recovery system for a vehicle, which employs a Rankine cycle for collecting mechanical energy (driving force) from waste heat of an engine. A general Rankine cycle circuit includes a pump configured to pump a working fluid in a liquid phase, a heat exchanger configured to heat the working fluid through heat exchange with the waste heat of the engine, an expander configured to expand the heated and evaporated working fluid to collect the mechanical energy, and a condenser configured to cool and condense the expanded working fluid. Those components are sequentially arranged on a circulation path to form a closed circuit.

In the Rankine cycle circuit, various driving sources may be considered as a driving source of the pump configured to pump the working fluid in the liquid phase. For example, Patent Literature 1 describes a configuration using a motor for driving the pump configured to pump the working fluid. In Patent Literature 1, assuming that the pump and the motor share a drive shaft, the following three types may be considered as the configuration of the pump and the motor.
(1) The inside of the pump and the inside of the motor are partitioned from each other by a shaft seal, and the inside of the motor is not in a working fluid atmosphere but is communicated to the outside air (atmospheric air).
(2) The inside of the pump and the inside of the motor are partitioned from each other by a shaft seal, and the inside of the motor is not in the working fluid atmosphere but is in a sealed state.
(3) The inside of the pump and the inside of the motor are communicated to each other, and both the inside of the pump and the inside of the motor are in the working fluid atmosphere in a sealed state.

### Citation List

### Patent Literature

[PTL 1] JP 2006-177266 A

### Summary of Invention

### Technical Problems

However, the configurations of the above-mentioned types (1) to (3) have the following problems.
(1) The partition by the shaft seal is not perfect, and hence the working fluid inside the pump is leaked into the motor through a gap of the shaft seal. The inside of the motor is communicated to the outside air, and hence the working fluid flows out to the outside of the Rankine cycle circuit.
(2) The working fluid inside the pump is leaked into the motor through a gap of the shaft seal, and the working fluid is condensed into liquid due to a low temperature inside the motor. The liquid is then accumulated inside the motor, and hence the driving of the motor is hampered.
(3) Stirring resistance is increased because the inside of the motor is in the working fluid atmosphere in the liquid phase, and hence the driving of the motor is hampered.

It is an object of the present invention to provide a waste-heat recovery system capable of preventing a working fluid from flowing out to an outside of a Rankine cycle circuit without hampering driving of a motor serving as a driving source of a pump.

### Solution to Problems

In order to solve the above-mentioned problems, according to one embodiment of the present invention, there is provided a waste-heat recovery system, including: a Rankine cycle circuit, the Rankine cycle circuit including: a pump configured to be driven by a motor to pump a working fluid in a liquid phase; a heat exchanger configured to heat the pumped working fluid with waste heat of an engine; an expander configured to expand the heated and evaporated working fluid to generate mechanical energy; and a condenser configured to cool and condense the expanded working fluid, the pump, the heat exchanger, the expander, and the condenser being sequentially arranged on a circulation path to form the Rankine cycle circuit, the pump and the motor sharing a drive shaft, an inside of the pump and an inside of the motor being partitioned from each other by a shaft seal, the inside of the pump defining a part of the circulation path of the Rankine cycle circuit; and a communication path configured to cause the inside of the motor to be communicated to the circulation path at a position between the expander and the condenser.

### Advantageous Effects of Invention

According to the waste-heat recovery system of one embodiment of the present invention, it is possible to prevent the working fluid from flowing out to the outside of the Rankine cycle circuit without hampering the driving of the motor serving as the driving source of the pump.

### Brief Description of Drawings

FIG. 1 is a diagram illustrating a configuration of a waste-heat recovery system according to a first embodiment of the present invention.
FIG. 2 is a schematic cross-sectional view illustrating a structure of a pump and a motor in a waste-heat recovery system according to the first embodiment and a second embodiment of the present invention.
FIG. 3 is a diagram illustrating a configuration of a waste-heat recovery system according to the second embodiment and a modification example of the present invention.
FIG. 4 is a schematic cross-sectional view illustrating a modification example of the structure of the pump and the motor in the waste-heat recovery system according to the first and second embodiments of the present invention.

### Description of Embodiments

Now, embodiments of the present invention are described with reference to the accompanying drawings.

### First Embodiment

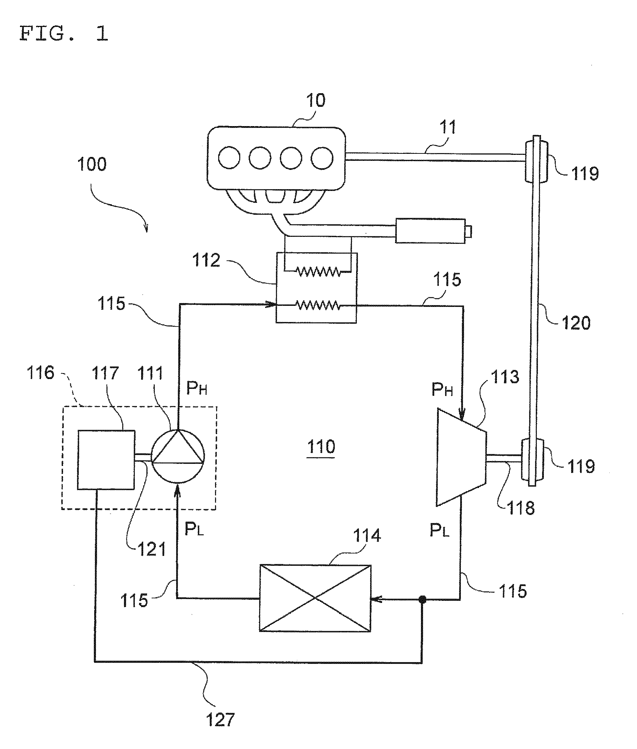

FIG. 1 illustrates a configuration of a waste-heat recovery system 100 according to a first embodiment of the present invention.

The waste-heat recovery system 100 to be installed in a vehicle includes a Rankine cycle circuit 110. The Rankine cycle circuit 110 includes a gear pump 111, a heat exchanger 112, an expander 113, and a condenser 114, which are sequentially arranged on a circulation path 115 to form the Rankine cycle circuit 110. A working fluid is circulated inside the circuit 110.

The gear pump 111 is accommodated in a housing 116, and is driven by an electric motor 117 that is also accommodated in the housing 116, to thereby pump, or transfer the working fluid in a liquid phase.

The heat exchanger 112 heats the working fluid, which is pumped by the gear pump 111, through heat exchange with an exhaust gas emitted from an engine 10.

The expander 113 expands the working fluid, which is heated and evaporated by the heat exchanger 112, to thereby generate mechanical energy (driving force). A drive shaft 118 of the expander 113 is connected to a drive shaft 11 of the engine 10 through intermediation of pulley 119 and a belt 120.

The condenser 114 cools and condenses the expanded working fluid through heat exchange with the ambient air.

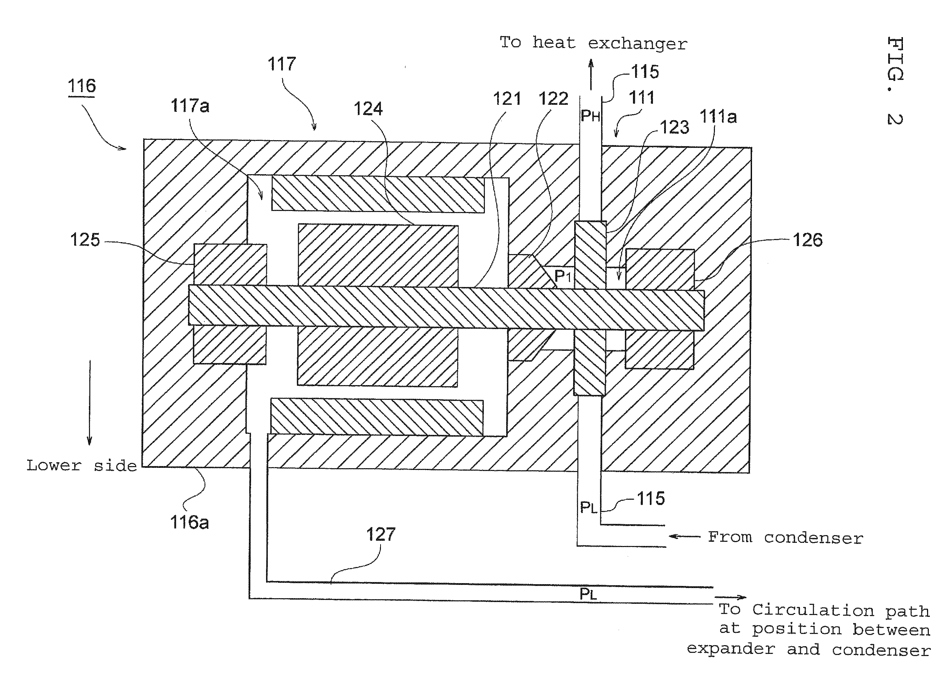

A structure of the gear pump 111 and the electric motor 117 accommodated in the housing 116 is described below with reference to a schematic cross-sectional view illustrated in FIG. 2. In FIG. 2, a direction of an arrow of the drawing sheet is defined as a downward direction, and the gravity acts in this direction.

The gear pump 111 and the electric motor 117 accommodated in the housing 116 share a drive shaft 121. Inside of the gear pump 111 defines a pump interior portion 111a, and inside of the electric motor 117 defines a motor interior portion 117a. The pump interior portion 111a and the motor interior portion 117a are partitioned from each other by a shaft seal 122. A gear 123 is mounted to a portion of the drive shaft 121 located in the pump interior portion 111a, and the pump interior portion 111a defines a part of the circulation path 115 of the Rankine cycle circuit 110. On the other hand, a rotor 124 is mounted to a portion of the drive shaft 121 located in the motor interior portion 117a. Both ends of the drive shaft 121 are respectively supported by bearings 125 and 126.

Further, one end of a communication path 127, which is communicated to the motor interior portion 117a, is connected to a bottom portion 116a of the housing 116, and the other end of the communication path 127 is connected to the circulation path 115 at a position between the expander 113 and the condenser 114 in the Rankine cycle circuit 110 (see FIG. 1). That is, the communication path 127 causes the motor interior portion 117a to be communicated to the circulation path 115 at the position between the expander 113 and the condenser 114 in the Rankine cycle circuit 110.

Next, an operation of the waste-heat recovery system 100 according to the first embodiment is described.

Firstly, referring to FIG. 1, when the waste-heat recovery system 100 is operated, the gear pump 111 is driven by the electric motor 117 to pump the working fluid in the Rankine cycle circuit 110. The working fluid in the liquid phase, which is pumped by the gear pump 111, is heated into a high temperature gas by the heat exchanger 112 with the exhaust gas of the engine 10, and is expanded by the expander 113 to generate the mechanical energy.

When the drive shaft 118 is driven to rotate due to the mechanical energy generated by the expander 113, this driving force is transmitted to the drive shaft 11 of the engine 10 through intermediation of the pulley 119 and the belt 120, to thereby assist the driving of the engine 10. The working fluid discharged from the expander 113 is cooled and condensed through heat exchange with the ambient air in a process of flowing inside the condenser 114, and then taken into the gear pump 111 again.

At this moment, as illustrated in FIG. 2, a pressure P₁ of the pump interior portion 111a is an intermediate pressure between a pressure P_{H} on a high pressure side of the Rankine cycle circuit 110 and a pressure P_{L} on a low pressure side of the Rankine cycle circuit 110, and this intermediate pressure P₁ is higher than a pressure of the motor interior portion 117a that is communicated to the low pressure side of the Rankine cycle circuit 110 through the communication path 127. Therefore, the working fluid leaked out through a gap of the shaft seal 122 flows toward the motor interior portion 117a from the pump interior portion 111a, and is returned to the circulation path 115 at the position between the expander 113 and the condenser 114 in the Rankine cycle circuit 110 through the communication path 127. With this configuration, the working fluid leaked out through the gap of the shaft seal 122 is prevented from flowing out to the outside of the Rankine cycle circuit 110. The working fluid in the pump interior portion 111a is in the liquid phase, but when the working fluid is leaked out through the gap of the shaft seal 122 to flow into the motor interior portion 117a, the working fluid is evaporated by the heat of the shaft seal 122 and the motor 117. Therefore, the working fluid does not work as stirring resistance when the rotor 124 of the electric motor 117 rotates, and hence the driving of the electric motor 117 is not hampered. Further, the reason why the working fluid passing through the communication path 127 is not returned to the circulation path 115 at a position between the condenser 114 and the gear pump 111 but is returned to the circulation path 115 at the position between the expander 113 and the condenser 114 is because, when the working fluid evaporated in the motor interior portion 117a is mixed with the working fluid in the liquid phase that is condensed by the condenser 114, the working fluid may cause cavitation in the gear pump 111.

As described above, in the waste-heat recovery system 100 according to the first embodiment, the pump interior portion 111a and the motor interior portion 117a are partitioned from each other by the shaft seal 122, and the pump interior portion 111a defines a part of the circulation path 115 of the Rankine cycle circuit 110. Moreover, the waste-heat recovery system 100 includes the communication path 127 that causes the motor interior portion 117a to be communicated to the circulation path 115 at the position between the expander 113 and the condenser 114. With this configuration, the working fluid can be prevented from flowing out to the outside of the Rankine cycle circuit 110 without hampering the driving of the electric motor 117 serving as a driving source of the gear pump 111.

Further, one end of the communication path 127 is connected to the bottom portion 116a of the housing 116 so that a condensed liquid of the working fluid or a lubricating oil contained in the working fluid is hard to be accumulated in the motor interior portion 117a. This also prevents the driving of the electric motor 117 from being hampered.

### Second Embodiment

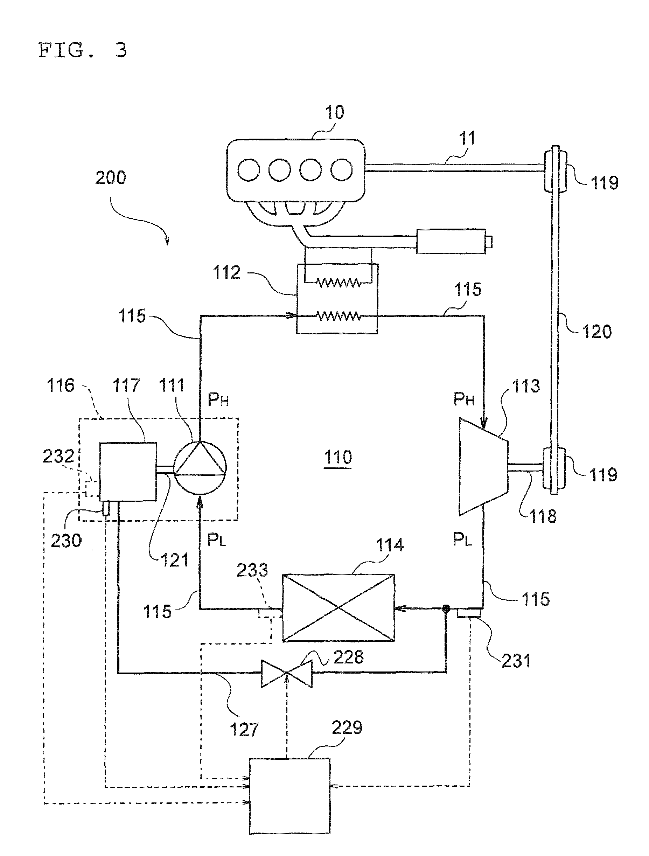

FIG. 3 illustrates a configuration of a waste-heat recovery system 200 according to a second embodiment of the present invention.

The waste-heat recovery system 200 according to the second embodiment further includes an on-off valve 228 in the middle of the communication path 127 and control means 229 for controlling the on-off valve 228, in addition to the configuration of the waste-heat recovery system 100 according to the first embodiment. In the following descriptions, the same or similar constituent element as the one illustrated in FIG. 1 is assigned with the same reference symbol, and hence a detailed description thereof is omitted.

In the waste-heat recovery system 100 according to the first embodiment, the working fluid leaked out through the gap of the shaft seal 122 flows toward the motor interior portion 117a from the pump interior portion 111a, and is returned to the circulation path 115 at the position between the expander 113 and the condenser 114 through the communication path 127. However, a temperature of the working fluid that is just discharged from the expander 113 is high while a temperature of the working fluid in the motor interior portion 117a is relatively low, and hence the working fluid may backflow to the motor interior portion 117a from the circulation path 115 depending on a temperature difference between the motor interior portion 117a and the circulation path 115.

To cope with this problem, in the waste-heat recovery system 200 according to the second embodiment, the on-off valve 228 is provided in the middle of the communication path 127. The control means 229 sets the on-off valve 228 to an open state when a pressure of the working fluid in the motor interior portion 117a, which is acquired by a pressure sensor 230, is higher than a pressure of the working fluid in the circulation path 115 at the position between the expander 113 and the condenser 114, which is acquired by a pressure sensor 231, by a value equal to or larger than a predetermined value so that it is guaranteed that there is no backflow of the working fluid. With this configuration, the backflow of the working fluid from the circulation path 115 to the motor interior portion 117a is prevented.

As described above, in the waste-heat recovery system 200 according to the second embodiment, the on-off valve 228 is provided on the communication path 127, and the control means 229 sets the on-off valve 228 to the open state when the pressure of the working fluid in the motor interior portion 117a is higher than the pressure of the working fluid in the circulation path 115 at the position between the expander 113 and the condenser 114 by the value equal to or higher than the predetermined value. With this configuration, the backflow of the working fluid from the circulation path 115 to the motor interior portion 117a is prevented.

### Other Embodiments

In the second embodiment, the control means 229 controls the on-off valve 228 based on a pressure difference between the motor interior portion 117a and the circulation path 115. However, a temperature difference between the motor interior portion 117a and the circulation path 115 may also be used to control the on-off valve 228. That is, as indicated by dashed and dotted lines in FIG. 3, by providing a temperature sensor 232 configured to detect a temperature of the working fluid in the motor interior portion 117a and a temperature sensor 233 configured to detect a temperature of the working fluid at an outlet of the condenser 14, the control means 229 may set the on-off valve 228 to the open state when the temperature of the working fluid in the motor interior portion 117a is higher than the temperature of the working fluid at the outlet of the condenser 114 in the circulation path 115 by a value equal to or larger than a predetermined value so that it is guaranteed that there is no backflow of the working fluid.

In the second embodiment, the on-off valve 228 may be a check valve that is autonomously set to the open state when the pressure of the motor interior portion 117a is higher than the pressure of the circulation path 115. This configuration eliminates the necessity of the control means 229, and hence the system configuration can be simplified.

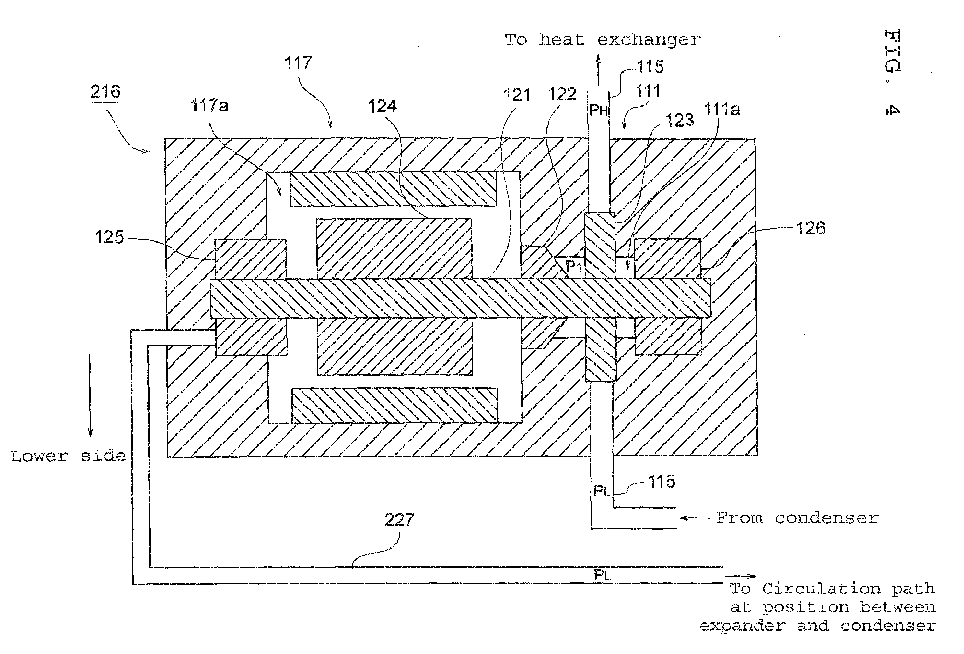

In the first and second embodiments, the one end of the communication path 127 that is communicated to the motor interior portion 117a is connected to the bottom portion 116a of the housing 116. However, as illustrated in FIG. 4, the one end of the communication path 127 may be connected to a vicinity of the bearing 125 of the drive shaft 121 in a housing 216. With this configuration, lubrication of the bearing 125 can be improved due to an action of the working fluid or a lubricating oil contained in the working fluid.

In the first and second embodiments, the communication path may be a pipe other than an external pipe. For example, the gear pump 111, the electric motor 117, and the expander 113 may be accommodated in the same housing, and the communication path may be formed in the housing.

## Claims

1. A waste-heat recovery system with a Rankine cycle circuit, in which a pump configured to be driven by a motor to pump a working fluid in a liquid phase, a heat exchanger configured to heat the pumped working fluid with waste heat of an engine, an expander configured to expand the heated and evaporated working fluid to generate mechanical energy and a condenser configured to cool and condense the expanded working fluid are sequentially arranged on a circulation path, wherein:
the pump and the motor sharing a drive shaft, and an inside of the pump and an inside of the motor being partitioned from each other by a shaft seal; and
the inside of the pump defining a part of the circulation path of the Rankine cycle circuit; and
said waste-heat recovery system comprises a communication path configured to cause the inside of the motor to be communicated to the circulation path at a position between the expander and the condenser.

2. A waste-heat recovery system according to claim 1, wherein:
the communication path is provided with an on-off valve; and
said waste-heat recovery system further comprises a control means for setting the on-off valve to an open state when a pressure of the working fluid in the inside of the motor is higher than a pressure of the working fluid in the circulation path at the position between the expander and the condenser by a value equal to or larger than a predetermined value.

3. A waste-heat recovery system according to claim 1, wherein:
the communication path is provided with an on-off valve; and
said waste-heat recovery system further comprises a control means for setting the on-off valve to an open state when a temperature of the working fluid in the inside of the motor is higher than a temperature of the working fluid at an outlet of the condenser by a value equal to or larger than a predetermined value.

4. A waste-heat recovery system according to claim 1, wherein the communication path is provided with a check valve configured to be set to an open state when a pressure of the working fluid in the inside of the motor is higher than a pressure of the working fluid in the circulation path at the position between the expander and the condenser.

5. A waste-heat recovery system according to any one of claims 1 to 4, wherein one end of the communication path is connected to a bottom portion of a housing of the motor.

6. A waste-heat recovery system according to any one of claims 1 to 4, wherein one end of the communication path is connected to a vicinity of a bearing of the drive shaft in a housing of the motor.
